# EUROPEAN PATENT APPLICATION

(11) **EP 4 170 974 A1**
(43) Date of publication of application: **26.04.2023**
(21) Application number: 21828140.0
(22) Date of filing: 22.06.2021
(51) Int. Cl.: H04L 12/24, H04W 16/02

(54) **SLICE SERVICE PROCESSING METHOD AND APPARATUS, NETWORK DEVICE, AND READABLE STORAGE MEDIUM**

(30) Priority: 23.06.2020 CN 202010581584
(71) Applicant: ZTE Corporation, Shenzhen, Guangdong 518057 (CN)
(72) Inventor: SHI, Jie, Shenzhen, Guangdong 518057 (CN)
(74) Representative: Blumbach · Zinngrebe Patentanwälte PartG mbB
(86) International application number: PCT/CN2021/101630
(87) International publication number: WO 2021/259286

(57) **Abstract**

The present application provides a method and an apparatus for processing slice service, a network device and a readable storage medium. The method includes: obtaining, from a received slice service request, a service requirement of a specified service carried by the slice service request; obtaining, slice resource use information from a data analysis server, and obtaining, from a slice manager, resource capability information of a related slice instance of the slice service request; determining current available resource information of the related slice instance according to the obtained slice resource usage information and the resource capability information of the related slice instance; and performing a requirement matching between the service requirement and the current available resource information of the related slice instance, so as to process the slice service request according to a result of the requirement matching.

## Description

### CROSS-REFERENCE TO RELATED APPLICATION

The present application claims the priority of Chinese Patent Application, No.202010581584.1, filed on June 23, 2020, the contents of which are incorporated herein in their entirety by reference.

### TECHNICAL FIELD

The present application relates to the field of communication technology, and in particular, to a method and an apparatus for processing slice service, a network device, and a readable storage medium.

### BACKGROUND

The 5th Generation Wireless Systems (5G) Network Slice Instance (NSI) can be understood as that a physical network is divided into a plurality of virtual end-to-end networks according to different requirements of Service-Level Agreement (SLA) such as bandwidth and delay, the networks are logically independent from each other, and if any virtual network fails or is abnormal, other virtual networks may not be affected.

The capability of each set of physical networks is fixed, and within the limited capability, unreasonable slicing of service of a slice instance would cause a great waste of resources and a higher operation cost.

### SUMMARY

The present application provides a method for processing slice service, including: obtaining, from a received slice service request, a service requirement of a specified service carried by the slice service request; obtaining, from a data analysis server, slice resource usage information, and obtaining, from a slice manager, resource capability information of a related slice instance of the slice service request; determining current available resource information of the related slice instance according to the obtained slice resource usage information and the resource capability information of the related slice instance; and performing a requirement matching between the service requirement and the current available resource information of the related slice instance so as to process the slice service request according to a result of the requirement matching.

The present application provides an apparatus for processing slice service, including: a service requirement obtaining module, configured to obtain, from a received slice service request, a service requirement of a specified service carried by the slice service request; a resource information obtaining module, configured to obtain slice resource usage information from a data analysis server and obtain resource capability information of a related slice instance of the slice service request from a slice manager; an available resource calculating module, configured to determine current available resource information of the related slice instance according to the obtained slice resource usage information and the resource capability information of the related slice instance; and a matching result processing module, configured to perform a requirement matching between the service requirement and the current available resource information of the related slice instance so as to process the slice service request according to a result of the requirement matching.

The present application provides a network device, including: at least one processor; a memory having at least one program stored on the memory, the at least one program, when executed by the at least one processor, causes the at least one processor to implement the method for processing slice service in the present application.

The present application provides a readable storage medium storing a computer program thereon, the computer program, when executed by a processor, causes the processor to implement the method for processing slice service in the present disclosure.

With respect to above and other aspects of the present application and implementations thereof, further description will be provided in accompanying drawings, detailed description and claims.

### BRIEF DESCRIPTION OF DRAWINGS

Fig. 1 shows a schematic diagram of network architecture illustrating a slice model association relationship according to the present application.
Fig. 2 shows a schematic diagram of bandwidth requirements of different users in the present application.
Fig. 3 shows a schematic diagram of services and functions provided by a Management Data Analysis (MDA) service.
Fig. 4 shows a schematic flowchart of a method for processing slice service according to the present application.
Fig. 5 shows a detailed flowchart of a method for processing slice service according to the present application.
Fig. 6 shows a schematic diagram of a time sequence of processing an enabling feasibility checking request according to the present application.
Fig. 7 shows a schematic diagram of a time sequence of processing a slice service enabling request according to the present application.
Fig. 8 shows a schematic structural diagram of an apparatus for processing slice service according to the present application.
Fig. 9 shows a structural diagram of exemplary hardware architecture of a computing device for implementing a method and an apparatus according to the present application.

### DETAILED DESCRIPTION

To make the present application more apparent, embodiments of the present application will be described in detail below with reference to the accompanying drawings. It should be noted that the embodiments and features of the embodiments in the present application may be arbitrarily combined with each other without conflict.

In the embodiments of the present application, a network slice instance may be a real-running logic network, and can meet certain network characteristics or service requirement. One network slice instance may provide at least one Network Service (NS). The network slice instance may be created by a network management system, and each network management system may create a plurality of network slice instances and may manage the network slice instances simultaneously, including performance monitoring, fault management, modification and the like in an operation process of the network slice instances. Each complete network slice instance may provide a complete end-to-end network service, and may be composed of at least one of a Network Slice Subnet Instance (NSSI) and a Network Function (NF).

The 3rd Generation Partnerships Project (3GPP) standardization organization sets forth requirement and specification for 5G communication networks. In a management domain, three logic management functions, including a Communication Service Management Function (CSMF), a Network Slice Management Function (NSMF) and a Network Slice Subnet (abbreviated as Sub-Slice) Management Function (NSSMF), are newly added in the standard.

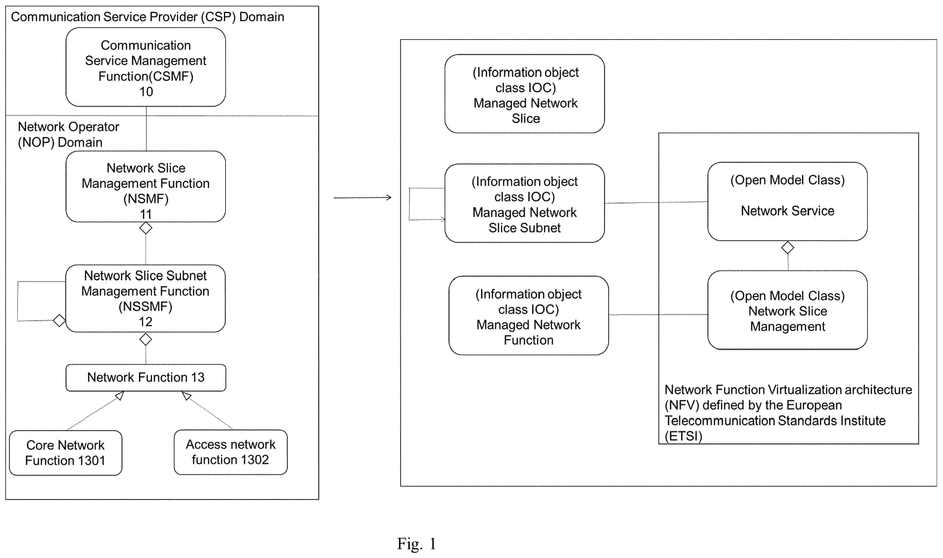

Fig. 1 shows a schematic diagram of network architecture illustrating a slice model association relationship according to the present application. In Fig. 1, the network architecture includes a CSMF entity 10, an NSMF entity 11 and an NSSMF entity 12. The CSMF entity 10 is located at a Communication Service Provider (CSP), and the NSMF entity 11 and the NSSMF entity 12 are located at a Network Operator (NOP).

It should be noted that each of the CSMF entity, the NSMF entity, and the NSSMF entity included in the network architecture is not limited to that shown in Fig. 1 in number. In practical applications, a plurality of CSMF entities, a plurality of NSMF entities, and a plurality of NSSMF entities may be included. It should be noted that such three management function entities may be denoted by other names, and the names are not limited in the present application.

In Fig. 1, the CSMF entity 10 may be configured to be responsible for transforming a communication service requirement of an operator and/or a third party customer into a requirement on a network or a network slice; transmitting the requirement on the network slice to the NSMF entity 11 through an interface between the CSMF entity 10 and the NSMF entity 11 (e.g., creating, terminating, modifying a network slice instance request, or the like); obtaining management data (e.g., performance, fault data, etc.) of the network slice from the NSMF entity 11; generating management data of a communication service running on a network slice instance; receiving a subscription requirement of the operator and/or the third party customer on the management data of the network slice and/or the management data of the communication service, and the like.

The NSMF entity 11 may be configured to be responsible for receiving the requirement, on the network slice, transmitted by the CSMF entity 10; managing life cycle, performance, fault and the like of the network slice instance; arranging a composition of the network slice instance; decomposing a requirement of the network slice instance into requirements of network slice subnet instances and/or network functions; transmitting a network slice subnet instance management request and the like to each NSSMF entity 12.

The NSSMF entity 12 may be configured to be responsible for receiving the requirement of the network slice subnet instance transmitted by the NSMF entity 11; managing the network slice subnet instance; arranging a composition of the network slice subnet instance; decomposing the requirement of the network slice subnet instance into requirements of network functions and/or nested network slice subnet instances; and transmitting a nested network slice subnet instance management request and the like to another NSSMF entity 12.

In Fig. 1, the network slice, serving as a complete logical network, may provide a set of Network Functions (NFs) and corresponding resources for certain network capabilities and network characteristics. The network slice includes an Access Network (AN) and a Core Network (Core Network, CN). Accordingly, the network functions 13 provided by the network slice may include: a Core Network Function (CNF) 1301 and an Access Network Function (ANF) 1302. That is, the network slice instance may be defined as an instantiation of the network slice, i.e., a set of deployed network functions that provide an intended network slice service.

With continued reference to Fig. 1, a relationship between a slice management system and corresponding management objects is also illustrated in Fig. 1. As an example, the management objects of the CSMF entity 10 are communication services (not shown in the figure), each of the communication services is implemented by at least one network slice function. As denoted by "Managed Network Slice" in Fig. 1, the management objects of the NSMF entity 11 are network slices, and each network slice may include zero or one network slice subnet, or a plurality of network slice subnets. As denoted by "Managed Network Slice Subnet" in Fig. 1, the management objects of the NSSMF entity 12 are network slice subnets, and each of the network slice subnets may be a basic sub-slice or a sub-slice formed by a plurality of basic sub-slices, so as to provide at least one network service; as denoted by "Managed Network Function" in Fig. 1, each sub-slice may contain at least one network function, such as performing network slice management. In a Network Function Virtualization (NFV) architecture defined by the European Telecommunication Standards Institute (ETSI), the NFV architecture can provide functions for the network slice, and the NFV architecture may actively provide a network service, the network service typically runs on dedicated hardware including a virtual machine, the virtual machine is considered as an operating system for simulating the dedicated hardware.

In the present application, the 5G network application scenarios are divided into three categories including an Ultra Reliable and Low Latency Communication (uRLLC) network, an Enhance Mobile Broadband (eMBB) network, a Massive Machine Type of Communication (mMTC) network, and the like. With the gradual construction and commercial use of 5G, each scenario gradually appears in its own commercial industry applications. The applications include Virtual Reality (VR), Augmented Reality (AR), ultra high definition video, internet of vehicles, networked unmanned aerial vehicles, and so on.

For different service requirements, resources are required differently, and on a set of physical networks, the resources are divided into different virtual networks, and the virtual networks are isolated from each other. The construction of the physical network is a process, for an operator, being very expensive and requiring continuous investment, including subsequent operation cost. The country also clearly puts forward the requirement of energy conservation and emission reduction on the operator. The capability of each set of physical networks is fixed, and within the limited capability, unreasonable slicing of service of the slice instance would cause a great waste of resources.

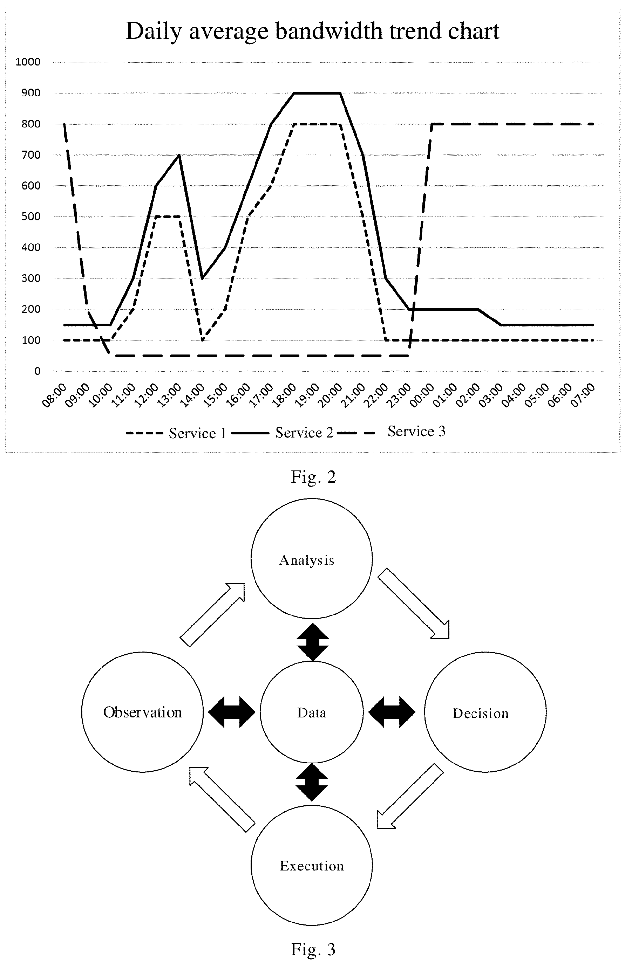

Fig. 2 shows a schematic diagram of bandwidth requirements of different users in the present application. As shown in Fig. 2, for example, a park is ready to build and enable an end-to-end eMBB 5G service, and three users in the park would use it to support their own services. Fig. 2 shows that the bandwidth requirements of the three users are 900M, 800M, 800M, respectively. A case where the current requirement only considers the bandwidth is taken as an example, and a maximum capability bandwidth of an end-to-end eMBB service is 1G.

To meet peak requirement, three physical networks are desired to be created for three services in the park, respectively, so as to meet the requirement of people simultaneously. As can be seen from Fig. 2, each service has different real requirements at different time points, and although the peak requirement is met, there is a great waste of resources during a non-peak time. Therefore, in order to avoid a waste of resources, a more reasonable service enabling mode is that service 1 monopolizes one set of physical networks, and since peaks and troughs are inconsistent between service 2 and service 3, service 2 and service 3 may share one set of physical networks, in such way, two sets of physical networks are actually constructed, so that one set of resources can be saved, and the waste of resources is avoided.

In the 28.809 protocol of the 3rd Generation Partnerships Project (3 GPP), for slice operation and maintenance, it is proposed that through services and functions of Management Data Analytics (MDA), the MDA plays a role of Analytics in a management cycle.

Fig. 3 shows a schematic diagram of services and functions provided by a Management Data Analysis (MDA) service. As shown in Fig. 3, the MDA service may classify and correlate data such as current resource usage data and historical resource usage data based on SLA, learn and recognize data patterns, and perform data observation and analysis to draw inferences, insights, and predictions, so as to make decision and execution.

The present application proposes a way to improve slice resource utilization. By utilizing capabilities of MDA and through more refined analysis of resources, existing resources can be maximized during enabling the slice service or during carrying out integration treatment after the slice service is enabled, fragmentation and waste of slice resources can be avoided, so that physical networks to be newly constructed by the operator can be reduced, which can reduce operating cost, and simultaneously can achieve the purpose of energy conservation and emission reduction.

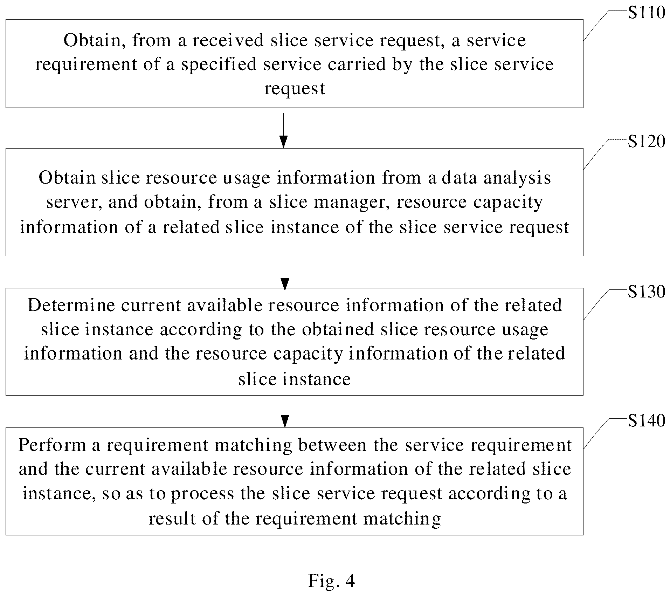

Fig. 4 shows a schematic flowchart of a method for processing slice service according to the present application. As shown in Fig. 4, the method for processing slice service in the present application includes following steps S 110 to S140.

At S 110, obtaining a service requirement of a specified service, carried by a slice service request, from the slice service request received.

At S120, obtaining slice resource usage information from a data analysis server, and obtaining resource capability information of a related slice instance of the slice service request from a slice manager.

At S130, determining current available resource information of the related slice instance according to the obtained slice resource usage information and the resource capability information of the related slice instance.

At S140, performing a requirement matching between the service requirement and the current available resource information of the related slice instance, so as to process the slice service request according to a result of the requirement matching.

According to the method for processing slice service in the present application, if a slice service request is received, according to a service requirement carried by the slice service request, slice resource usage information is obtained from a data analysis server, resource capability information of a related slice instance is obtained from a slice manager, and current available resource information of the related slice instance is calculated, so that a requirement matching is performed between the service requirement and the current available resource information of the related slice instance, and the slice service request is processed according to a result of the requirement matching. The method can utilize the analysis capability of MDA to process the slice service according to the result of the requirement matching between the service requirement and the current available resource information of the related slice instance, so as to help the operator to solve the problem of waste of physical network resources under unreasonable service enabling deployment, to assist the operator to achieve a goal of most reasonably utilizing the physical network resources.

In some implementations, the slice service request at step S 110 may include a slice service feasibility checking request and a slice service enabling request.

In some implementations, the data analysis server at step S120 may be considered as a network element capable of providing a Management Data Analysis Service (MDAS). The slice resource usage information obtained from the data analysis server is network data model information, of a resource usage condition of the service carried by each slice instance, obtained by collecting, through the data analysis server, the resource usage condition of the service carried by each slice instance managed by the slice manager, according to a predetermined resource usage performance index; and the obtained slice resource usage information includes: network data model information of resources actually used by each running service in the corresponding slice instance, and the network data model information includes, but is not limited to, resource usage period, resource usage amount and viscosity value.

In some implementations, the data analysis server may collect and analyze two types of resources, one type is a usage of an actual resource index of the slice instance, and the other type is a usage of an actual resource index of each running service.

The resource information collected according to the actual resource index of the slice instance includes, but is not limited to, a bandwidth, a number of access users, and the like, and may be used for extracting actual resource usage model information of a total service carried by periodic resources; the resource information collected according to the actual resource index of each running service includes, but is not limited to, a bandwidth, a number of access users, and the like, and is used for extracting periodic actual resource usage model information of specified services. As an example, periodic resource usage model information may be resource usage model information with cycles of hours, days, weeks, holidays, or the like.

In the present application, the data analysis server may perform big data analysis on the data by using the collected data (information), and extract a total resource model of the service carried by the slice instance and an actual usage resource model of each service. Therefore, an in-use network model data corresponding to each slice instance and an unused network model data corresponding to each slice instance may be obtained from the data analysis server.

In some implementations, if the slice service request is the slice service feasibility checking request, the slice service request further carries identification information of a specified slice instance, and the related slice instance is the specified slice instance.

In some implementations, step S140 may include: S11, if the result of the requirement matching indicates that the current available resource information of the specified slice instance can meet the service requirement, generating an authentication success response message as a processing result of the slice service feasibility checking request; S12, if the result of the requirement matching indicates that the current available resource information of the specified slice instance cannot meet the service requirement, generating an authentication failure response message as a processing result of the slice service feasibility checking request.

Through steps S11 and S12, during processing the slice service feasibility checking request, a service authentication is performed in a service enabling scenario of the specified slice instance.

In some implementations, after step S12, the method for processing slice service further includes: S13, transmitting the authentication success response message to the slice manager, and carrying instance information of the specified slice instance in the authentication success response message.

In the present application, if the authentication is successful, the authentication success response message may be returned to the slice manager, and since the current available resource information of the specified slice instance meets the service requirement (i.e., the specified slice instance meets the service requirement), the instance information of the specified slice instance that meets the service requirement may also be returned in the authentication success response message.

In some implementations, if the slice service request is the slice service enabling request, the related slice instance includes a plurality of slice instances managed by the slice manager.

In some implementations, step S140 may include: S21, performing a requirement matching between the service requirement and the current available resource information of the slice instances to obtain the slice instances that can meet the service requirement; S22, selecting, from the slice instances that can meet the service requirement, the slice instance meeting a predetermined condition as a processing result of the slice service enabling request.

In some implementations, the slice instance meeting the predetermined condition includes: the slice instance that can meet the service requirement and has the current available resource information closest to the service requirement.

In the present application, a requirement matching can be performed according to the specified slice instance and the service requirement in the received slice service enabling request, and the instances meeting the service requirement can be selected.

In some implementations, after step S22, the method for processing slice service may further include: S23, transmitting the instance information of the slice instance that meets the predetermined condition to the slice manager.

In some implementations, if there is no slice instance that can meet the service requirement, or there is no slice instance that meets the predetermined condition, the method for processing slice service further includes: S24, transmitting a selection failure indication message to indicate that there is currently no slice instance that can carry the service requirement of the specified service.

In the present application, if there is a desired slice instance, instance information of the slice instance may be returned to the slice manager; and if there is no slice instance that meets the service requirement, the selection failure indication message is returned.

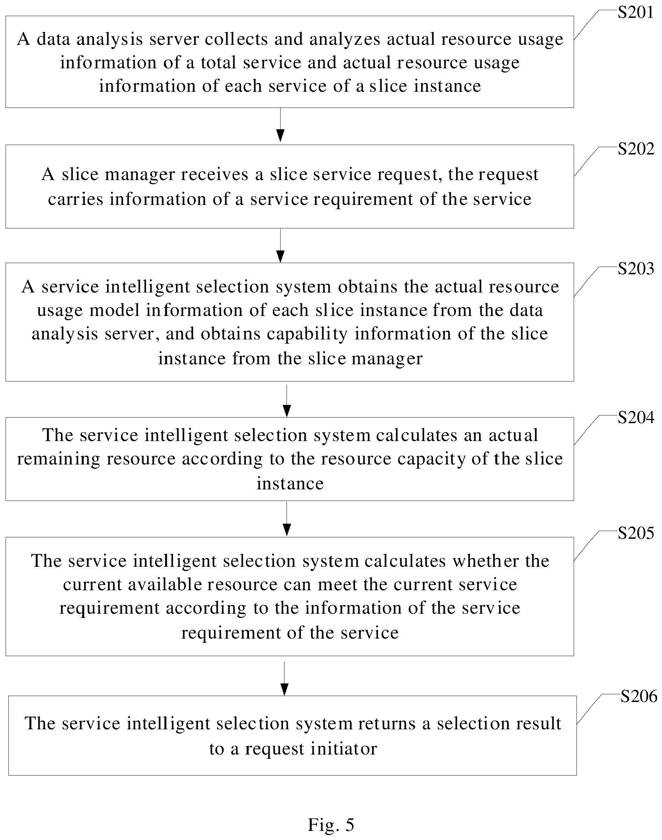

Fig. 5 shows a detailed flowchart of a method for processing slice service according to the present application. As shown in Fig. 5, a service intelligent selection system may be used to implement the method for processing slice service according to the present application, and in some implementations, the method for processing slice service may include following steps S201 to S206.

At S201, a data analysis server collects and analyzes actual resource usage information of a total service and actual resource usage information of each service of a slice instance.

In this step, the data analysis server may collect a resource usage condition corresponding to the actual resource index of the slice instance, and extract periodic actual resource usage model information of the total service carried by the slice instance from the resource usage condition corresponding to the actual resource index; the data analysis server may also collect the resource usage condition corresponding to the actual resource index of each running service, and extract periodic actual resource usage model information of each service carried by the slice instance.

At S202, a slice manager receives a slice service request that carries information of a service requirement (i.e., requirement information) of the service.

In this step, the received slice service request includes a slice service enabling request or an instance availability checking request received from another system, and carries requirement information of the service. For example, the slice service enabling request or the instance availability checking request received from another system may be a request initiated by a user or an external system.

At S203, a service intelligent selection system obtains the actual resource usage model information of each slice instance from the data analysis server, and obtains capability information of the slice instance from the slice manager.

In this step, the actual usage resource model information is obtained from the data analysis server (e.g., MDAS). Table 1 below shows actual usage resource model information, in the present application, currently obtained by taking the type of resources being a bandwidth as an example.

**Table 1**

| table of current actual usage bandwidth resource model information corresponding to slice instances | | |
|---|---|---|
| Actual usage bandwidth (bit/s) | Period/cycle | Viscosity value |
| actual usage bandwidth uplink: 50M | 9:00 ∼ 18:00 | 10M |
| actual usage bandwidth uplink: 10M | 18: 00 ∼ 9: 00 | 2M |
| actual usage bandwidth downlink: 350M | 9:00 ∼ 18:00 | 50M |
| actual usage bandwidth downlink: 600M | 18: 00 ∼ 23: 00 | 100M |
| actual usage bandwidth downlink: 200M | 23:00 ∼ 9:00 | 10M |

In this step, as an example, the capability information of the slice instance is obtained from the slice manager, and for example, the bandwidth is currently taken as an example, and the obtained bandwidth capability carried by the slice instance (i.e., physical network) is 1G.

At S204, the service intelligent selection system calculates an actual remaining resource according to the resource capability of the slice instance.

Table 2 below shows actual remaining resource model information, in the present application, calculated by taking the type of resources being a bandwidth as an example.

**Table 2**

| table of current actual remaining bandwidth resource corresponding to slice instances model information | |
|---|---|
| Available bandwidth resource (bit/s) | Period/cycle |
| available bandwidth uplink: 950M | 9:00 ∼ 18:00 |
| available bandwidth uplink: 990M | 18: 00 ∼ 9: 00 |
| available bandwidth downlink: 650M | 9:00 ∼ 18:00 |
| available bandwidth downlink: 400M | 18: 00 ∼ 23: 00 |
| available bandwidth downlink: 800M | 23:00 ∼ 9:00 |

At S205, the service intelligent selection system calculates whether current available resources can meet the current service requirement according to the requirement information of the service.

In the above example, a downlink peak period of the service requirement for requiring the available bandwidth is from 20:00 to 22:00, and the bandwidth required by the service requirement is 700M, then a calculation result indicates that the current slice instance cannot meet the service requirement of the service; if the downlink peak period of the service requirement for requiring the available bandwidth is from 00: 00 to 08: 00 and the required bandwidth is 700M, the current slice instance can meet the service requirement of the service.

At S206, the service intelligent selection system returns a selection result to a request initiator.

In the method for processing slice service according to the present application, a capability of analyzing and modeling for the actual usage resource can be realized through the MDAS, the service intelligent selection module provides service intelligent matching calculation capability, and by referring to the service requirement, availability checking and calculation are performed on the slice instance, so as to select the available slice instance meeting the requirement, so that problems of resource fragmentation and insufficient resource utilization of the slice instance can be effectively solved.

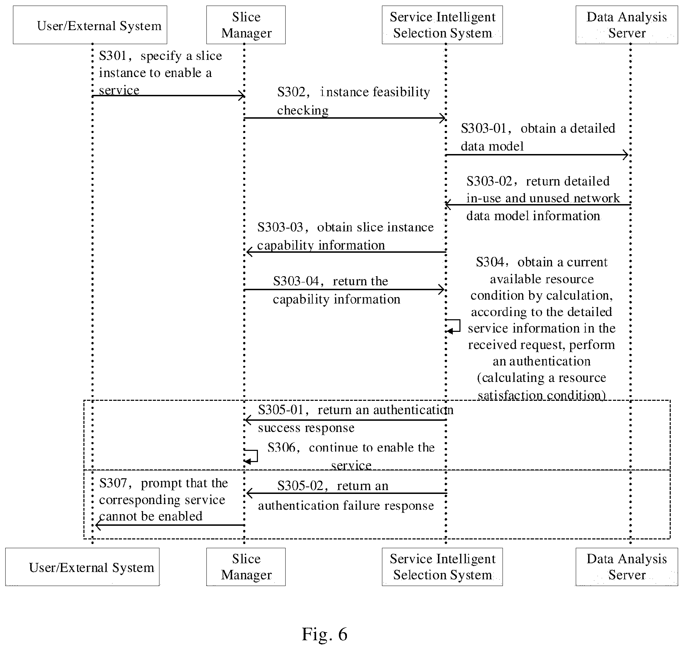

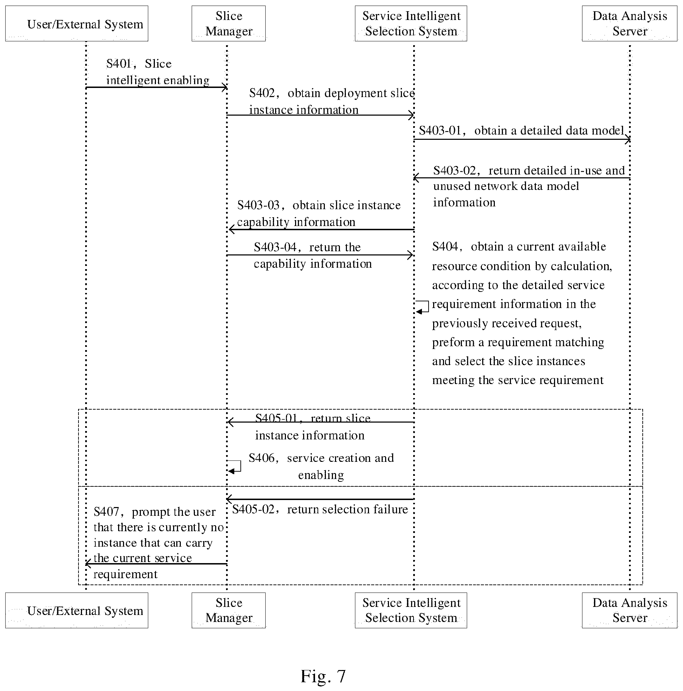

For better understanding the present application, a processing procedure in a case where the slice service request is the slice service feasibility checking request of a specified slice instance and a processing procedure in a case where the slice service request is the slice service enabling request of a non-specified slice instance in the present application are described below with reference to Fig. 6 and Fig. 7.

Fig. 6 shows a schematic diagram of a time sequence of processing an enabling feasibility checking request according to the present application. As shown in Fig. 6, in some implementations, the processing an enabling feasibility checking request may include following steps S301 to S307.

At S301, a user or an external system specifies a slice instance through a slice manager and inputs service requirement to perform a checking for feasibility of enabling a slice service.

At S302, the slice manager transmits a request to the service intelligent selection module, and the request carries the slice instance and detailed information of the service requirement.

At S303-01, after receiving the request, the service intelligent selection system initiates a request, for obtaining a detailed in-use network data model and an unused network data model, to the data analysis server.

At S303-02, the data analysis server returns detailed in-use network data model information (i.e., information of detailed in-use network data model) and unused network data model information (i.e., information of unused network data model).

At S303-03, the service intelligent selection system transmits a request for obtaining corresponding slice instance capability information to the slice manager according to instance information of the slice instance.

At S303-04, the service intelligent selection system receives capability data supported by the current slice instance and transmitted by the slice manager.

At S304, the service intelligent selection system calculates a current available resource condition, and checks an availability of the slice instance according to information of the service requirement in the previously received request, and determines whether a resource of the slice instance meets the service requirement.

At S305-01, if the resource of the slice instance meets the service requirement, an authentication success response message is returned.

In this step, the instance information of the slice instance that currently meets the service requirement may be carried in the authentication success response message.

At S305-02, if the resource of the slice instance does not meet the service requirement, an authentication failure response message is returned.

At S306, after the slice manager receives the authentication success response message, the slice manager may continue to enable the service on the specified slice instance.

At S307, after the slice manager receives the authentication failure response message, the slice manager prompts the user that the corresponding service cannot be enabled on the specified slice instance.

Through the processing of the enabling feasibility checking request in the present application, the service authentication may be performed under the service enabling scenario of the specified slice instance by referring to an actual resource usage condition.

Fig. 7 shows a schematic diagram of a time sequence of processing a slice service enabling request according to the present application. As shown in Fig. 7, in some implementations, the processing a slice service enabling request may include following steps S401 to S407.

At S401, the slice manager receives a slice service enabling request from a user or an external system, and the slice service enabling request carries information of a service requirement.

At S402, the slice manager transmits the slice service enabling request carrying the information of the service requirement to a service intelligent selection system.

At S403-01, after receiving the slice service enabling request, the service intelligent selection system initiates a request for obtaining a detailed in-use network data model and an unused network data model to the MDAS.

At S403-02, the data analysis server returns detailed in-use network data model information and unused network data model information.

At S403-03, the service intelligent selection system transmits a request for obtaining slice instance capability information to the slice manager.

At S403-04, the service intelligent selection system receives capability data supported by the current slice instance and transmitted by the slice manager.

At S404, the service intelligent selection system calculates a current available resource condition and selects the slice instance meeting the service requirement according to the information of the service requirement in the previously received request.

In this step, a condition to be satisfied for selecting the slice instance include: the slice instance meets the service requirement and the current available resource information of the slice instance is closest to the service requirement.

At S405-01, if there is any slice instance selected, instance information of the slice instance is returned;

At S405-02, if there is no slice instance to be selected, a slice instance selection failure message is returned.

At S406, after receiving the instance information of the slice instance, the slice manager initiates service creation, enabling and configuration delivery to the slice instance.

At S407, after receiving the slice instance selection failure information, the slice manager prompts the user that there is currently no slice instance that can carry the current service requirement, and a complete end-to-end creation of a slice instance is required.

The processing the slice service enabling request in the present application refers to the actual resource usage condition, service enabling intellectualization and slice instance intelligent selection can be realized under a scenario of multiple slice instances in a case where no slice instance is specified.

According to the method, for processing slice service, referring to the actual resource usage condition, in the present application, it is possible to deploy as many services as possible in the case of resources being limited, and in the process of slice instance feasibility checking or slice instance intelligent selecting, a relatively high utilization rate of resources is ensured, which effectively solves the problem of slice instance resource fragmentation and insufficient resource utilization of the slice instance, and can assist the operator to achieve the goal of most reasonably utilizing the physical network resources.

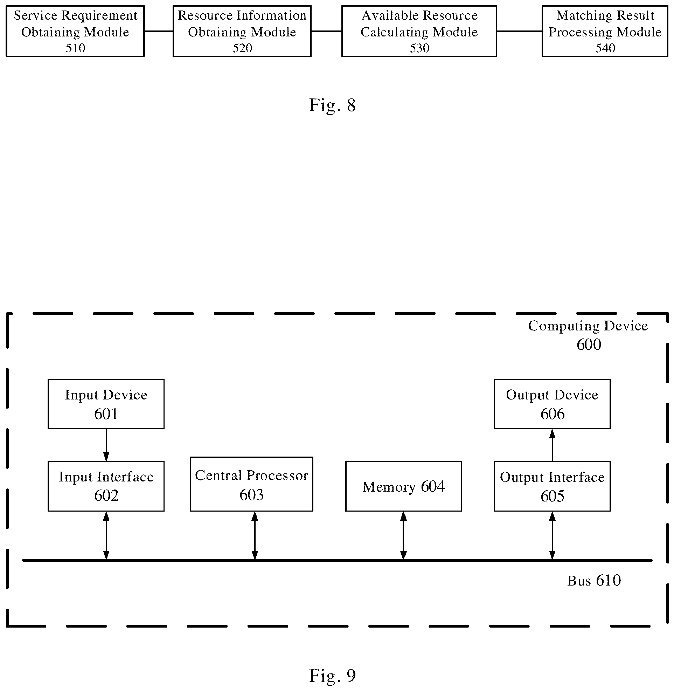

The following describes an apparatus for processing slice service according to the present application in detail with reference to the drawings. Fig. 8 shows a schematic structural diagram of an apparatus for processing slice service according to the present application. As shown in Fig. 8, the apparatus for processing slice service may include a service requirement obtaining module 510, a resource information obtaining module 520, an available resource calculating module 530, and a matching result processing module 540.

The service requirement obtaining module 510 is configured to obtain a service requirement of a specified service carried by a slice service request from the received slice service request.

The resource information obtaining module 520 is configured to obtain slice resource usage information from a data analysis server, and obtain resource capability information of a related slice instance of the slice service request from the slice manager.

The available resource calculating module 530 is configured to determine current available resource information of the related slice instance according to the obtained slice resource usage information and the resource capability information of the related slice instance.

The matching result processing module 540 is configured to perform a requirement matching between the service requirement and the current available resource information of the related slice instance, so as to process the slice service request according to a result of the requirement matching.

According to the apparatus for processing slice service in the present application, the slice resource usage information is obtained from the data analysis server according to the service requirement in the received slice service request, the resource capability information of the related slice instance related to the slice service request is obtained from the slice manager, and therefore the current available resource information of the related slice instance is determined, so that during processing the slice service request, after the service requirement is matched with the current available resource, the slice service request is processed according to the result of the requirement matching, so as to help the operator to solve the problem of waste of physical network resources under unreasonable service enabling deployment, and to assist the operator to achieve the goal of most reasonably utilizing the physical network resources.

In some implementations, if the slice service request is a slice service feasibility checking request, the slice service request further carries identification information of a specified slice instance, and the related slice instance is the specified slice instance.

In the present application, the matching result processing module 540 may include: an authentication success response generation module configured to generate an authentication success response message as a processing result of the slice service feasibility checking request if the result of the requirement matching indicates that the current available resource information of the specified slice instance can meet the service requirement; and an authentication failure response generation module configured to generate an authentication failure response message as a processing result of the slice service feasibility checking request if the result of the requirement matching indicates that the current available resource information cannot meet the service requirement.

In some implementations, the apparatus for processing slice service may further include: an authentication success response transmitting module configured to transmit the authentication success response message to the slice manager, and the authentication success response message carries the instance information of the specified slice instance.

In some implementations, if the slice service request is a slice service enabling request, the related slice instance includes a plurality of slice instances managed by the slice manager.

In the present application, the matching result processing module 540 may include: a slice instance determining module configured to perform a requirement matching between the service requirement and the current available resource information of the slice instances to obtain the slice instances meeting the service requirement; and a slice instance selecting module configured to select the slice instance meeting a predetermined condition from the slice instances meeting the service requirement as a processing result of the slice service enabling request.

In some implementations, the apparatus for processing slice service may further include: an instance information transmitting module configured to transmit the instance information of the slice instance meeting the predetermined condition to the slice manager.

In some implementations, if there is no slice instance that can meet the service requirement, or there is no slice instance that meets the predetermined condition, the apparatus for processing slice service may further include: a selection failure indication transmitting module configured to transmit a selection failure indication message to indicate that there is currently no slice instance that can carry the service requirement of the specified service.

In some implementations, the slice instance meeting the predetermined condition include: the slice instance that can meet the service requirement and has the current available resource information closest to the service requirement.

In some implementations, the obtained slice resource usage information is network data model information, of a resource usage condition of the service carried by each slice instance, obtained by collecting, through the data analysis server, the resource usage condition of the service carried by each slice instance managed by the slice manager, according to a predetermined resource usage performance index; and the obtained slice resource usage information includes: network data model information of resources actually used by each running service in the corresponding slice instance, and the network data model information includes, but is not limited to, resource usage period, resource usage amount and viscosity value.

According to the apparatus for processing slice service in the present application, the slice instance meeting the service requirement of a specified service can be intelligently selected for a system such as a slice manager. In the present application, the capability information of the slice instance can be obtained from the slice manager, and the actual usage resource model of the running service can be obtained through message interaction by aid of the existing analysis capability of the MDAS. By calculation, whether the existing slice instance can meet the service requirement or not is judged, and if multiple slice instances meet the service requirement, the slice instance with the highest resource utilization rate is selected, and a notification is returned to the corresponding system, so that the new service is deployed in the maximum possible on the existing slice instance, and the maximum utilization of resource of the slice instance is ensured.

It should be understood that the present application is not limited to the particular configurations and processes described above and illustrated in the drawings. For convenience and simplicity of description, detailed description of any known method is omitted here, and for specific operating processes of the system, the module and the unit described above, reference may be made to corresponding processes in the foregoing method, which are not described again here.

Fig. 9 shows a structural diagram of exemplary hardware architecture of a computing device for implementing a method and an apparatus according to the present application.

As shown in Fig. 9, a computing device 600 includes an input device 601, an input interface 602, a central processor 603, a memory 604, an output interface 605, and an output device 606. The input interface 602, the central processor 603, the memory 604, and the output interface 605 are interconnected via a bus 610, and the input device 601 and the output device 606 are connected to the bus 610 via the input interface 602 and the output interface 605, respectively, and then connected to other components of the computing device 600.

In the present application, the input device 601 receives input information from exterior, and transmits the input information to the central processor 603 via the input interface 602; the central processor 603 processes the input information based on computer-executable instructions stored in the memory 604 to generate output information, and stores the output information temporarily or permanently in the memory 604, and then transmits the output information to the output device 606 via the output interface 605; the output device 606 outputs the output information to external of the computing device 600 to be used by the user.

In some implementations, the computing device shown in Fig. 9 may be implemented as a network device that may include: a memory configured to store a program; a processor configured to execute the program stored in the memory to perform the method for processing slice service described above.

In some implementations, the computing device shown in Fig. 9 may be implemented as a service intelligence selection system that may include: a memory configured to store a program; a processor configured to execute the program stored in the memory to perform the method for processing slice service described above.

The above description is only for exemplary implementations of the present application, and is not intended to limit the scope of the present application. In general, the various implementations of the present application may be implemented in hardware or special purpose circuits, software, logic or any combination thereof. For example, some aspects may be implemented in hardware, while other aspects may be implemented in hardware or software which may be executed by a controller, microprocessor or any other computing device, although the present application is not limited thereto.

The implementations of the present application may be implemented by a data processor of a mobile device executing computer program instructions, for example in a processor entity, or by hardware, or by a combination of software and hardware. The computer program instructions may be assembly instructions, Instruction Set Architecture (ISA) instructions, machine-related instructions, microcode, firmware instructions, state setting data, or source or object code written in any combination of at least one programming language.

The block diagrams of any logic flows in the drawings of the present application may represent program steps, or may represent interconnected logic circuits, modules, and functions, or may represent a combination of program steps and logic circuits, modules, and functions. The computer program may be stored on the memory. The memory may be of any type suitable to the local technical environment and may be implemented by using any suitable data storage technology, includes, but not limited to, Read Only Memory (ROM), Random Access Memory (RAM), optical storage devices and systems (digital versatile disks, DVDs or CD disks), or the like. The computer-readable medium may include a non-transitory storage medium. The data processor may be of any type suitable to the local technical environment, includes, but not limited to, general purpose computers, special purpose computers, microprocessors, Digital Signal Processors (DSPs), Application Specific Integrated Circuits (ASICs), programmable logic devices (FGPAs), and processors based on a multi-core processor architecture.

The foregoing has provided, by way of exemplary and non-limiting examples, a detailed description of exemplary embodiments of the present application. Various modifications and adaptations to the foregoing embodiments may become apparent to a person skilled in the related art in view of the accompanying drawings and the appended claims, without departing from the scope of the present application. Accordingly, the proper scope of the present application is to be determined according to the claims.

## Claims

1. A method for processing slice service, comprising:
obtaining, from a received slice service request, a service requirement of a specified service carried by the slice service request;
obtaining, slice resource usage information from a data analysis server, and obtaining, from a slice manager, resource capability information of a related slice instance of the slice service request;
determining current available resource information of the related slice instance according to the obtained slice resource usage information and the resource capability information of the related slice instance; and
performing a requirement matching between the service requirement and the current available resource information of the related slice instance, so as to process the slice service request according to a result of the requirement matching.

2. The method of claim 1, wherein the slice service request is a slice service feasibility checking request, the slice service request further carries identification information of a specified slice instance, and the related slice instance is the specified slice instance;
the performing a requirement matching between the service requirement and the current available resource information of the related slice instance, so as to process the slice service request according to a result of the requirement matching comprises:
in response to that the result of the requirement matching indicates that the current available resource information of the specified slice instance meets the service requirement, generating an authentication success response message as a processing result of the slice service feasibility checking request; and
in response to that the result of the requirement matching indicates that the current available resource information fails to meet the service requirement, generating an authentication failure response message as a processing result of the slice service feasibility checking request.

3. The method of claim 2, further comprising:
after generating the authentication success response message, transmitting the authentication success response message to the slice manager, and carrying instance information of the specified slice instance in the authentication success response message.

4. The method of claim 1, wherein the slice service request is a slice service enabling request, and the related slice instance includes multiple slice instances managed by the slice manager;
the performing a requirement matching between the service requirement and the current available resource information of the related slice instance, so as to process the slice service request according to a result of the requirement matching comprises:
performing a requirement matching between the service requirement and the current available resource information of the slice instances to obtain slice instances meeting the service requirement; and
selecting the slice instance meeting a predetermined condition from the slice instances meeting the service requirement as a processing result of the slice service enabling request.

5. The method of claim 4, further comprising:
in response to that the slice instance meeting the predetermined condition is selected as the processing result of the slice service enabling request, transmitting instance information of the slice instance meeting the predetermined condition to the slice manager.

6. The method of claim 4, further comprising:
in response to that there is no slice instance meeting the service requirement or there is no slice instance meeting the predetermined condition, transmitting a selection failure indication message to indicate that no slice instance can carry the service requirement of the specified service currently.

7. The method of any one of claims 4 to 6, wherein,
the slice instance meeting the predetermined condition comprises: the slice instance meets the service requirement and has the current available resource information closest to the service requirement.

8. The method of any one of claims 1 to 6, wherein,
the obtained slice resource usage information is network data model information, of a resource usage condition of the service carried by each slice instance, obtained by collecting, through the data analysis server, the resource usage condition of the service carried by each slice instance managed by the slice manager, according to a predetermined resource usage performance index; and
the obtained slice resource usage information includes: network data model information of resources actually used by each running service in the corresponding slice instance, wherein the network data model information at least comprises: resource usage period, resource usage amount, and viscosity value.

9. An apparatus for processing slice service, comprising:
a service requirement obtaining module, configured to obtain a service requirement of a specified service carried by a slice service request from the received slice service request;
a resource information obtaining module, configured to obtain slice resource use information from a data analysis server and obtain resource capability information of a related slice instance of the slice service request from a slice manager;
an available resource calculating module, configured to determine current available resource information of the related slice instance according to the obtained slice resource usage information and the resource capability information of the related slice instance; and
a matching result processing module, configured to perform a requirement matching between the service requirement and the current available resource information of the related slice instance, so as to process the slice service request according to a result of the requirement matching.

10. A network device, comprising:
at least one processor;
a memory having at least one program stored on the memory, the at least one program, when executed by the at least one processor, causes the at least one processor to implement the method for processing slice service of any of claims 1 to 8.

11. A computer-readable storage medium storing a computer program thereon, the computer program, when executed by a processor, causes the processor to implement the method for processing slice service of any one of claims 1 to 8.
